# EUROPEAN PATENT SPECIFICATION

(11) **EP 2 249 660 B1**
(45) Date of publication and mention of the grant of the patent: **05.09.2012**
(21) Application number: 09716368.7
(22) Date of filing: 03.02.2009
(51) Int. Cl.: A23G 9/48, A23G 9/50, A23G 9/42

(54) **FROZEN CONFECTIONARY PRODUCT**
GEFRORENES SÜSSWARENPRODUKT
PRODUIT DE CONFISERIE CONGELE

(30) Priority: 29.02.2008 EP 08152135; 29.02.2008 EP 08004062
(43) Date of publication of application: 17.11.2010
(73) Proprietor: Nestec S.A., 1800 Vevey (CH)
(72) Inventor: GARBI, Marco, I-43100 Parma (IT); GNACCARINI, Gabriele, I-43100 Parma (IT)
(74) Representative: Baumgartner Harris, Pauline
(86) International application number: PCT/EP2009/051173
(87) International publication number: WO 2009/109437

(56) References cited:
- EP-A- 0 249 446
- EP-A- 0 322 469
- EP-A- 1 159 879
- EP-A- 1 808 080
- WO-A-98/04149
- WO-A-2007/072184
- US-A- 3 922 361
- US-A- 4 816 283
- US-A- 4 935 258
- US-A- 4 971 824
- US-A- 6 093 438

## Description

### Field of the Invention

The present invention relates to a frozen confectionary product having very high fruit content. It also relates to a process for the production of this frozen aqueous-based ice confectionary product.

### Background of the Invention

Ice confections such as ice lollies, ice sticks, popsicles, slushes, sorbets etc. are very popular and well accepted by the consumers. These products are typically developed as water ice, fruit ice and milk ice. The consumers especially prefer very fresh ice confection products having an intensive natural fruit taste.

Ice cream products containing fruit are known. EP 1 400 176 Al describes a frozen aerated product containing defined proportions of soluble dietary fiber and insoluble dietary fiber. This fiber material is derived from fruits or vegetables from one or more fruit purees, one or more vegetable purees or mixtures thereof. The products described do also contain considerable amounts of sugars, fat and milk components such as skimmed milk powder.

EP 1 159 879 discloses a frozen aqueous-based ice confectionary product comprising a center of aqueous-based ice having a degree of overrun of 20% to 80% and a non aerated outer shell. The description states up to 20% of solids coming from fruit purée in the core (column 2, line 31) and up to 5% of solids coming from fruit purée or fruit juice in the shell (column 2, line 47). In the examples, the fruit content of example 1 is of 16% in the core and 5% in the shell. In example 2. concentrates are used.

EP 1 808 080 discloses a process for making a composite frozen aqueous based ice confection.

It is object of the invention to provide an added-fat-free frozen aqueous-based ice confectionary product with optimized nutritional balance, having an unmatched very high fruit content and a pleasant texture well accepted by the consumer.

### Summary of the Invention

In a first aspect, the invention provides a frozen aqueous-based ice confectionary product including:
- a center of aqueous-based ice comprising a fruit content of 60 to 95 wt.-% and having a degree of overrun of 20 to 80% and
- a non-aerated outer shell of aqueous-based ice comprising a fruit content of 60 to 95 wt.-%.

Preferably, the frozen aqueous-based ice confectionary product is a composite material comprising 40 to 50% of the center of aqueous-based ice and 30 to 50% of the outer shell.

In a second aspect, the invention provides a process for the production of a composite frozen aqueous-based ice confectionary product comprising the steps of
- introducing a liquid mixture here-referred as "external mixture" comprising a fruit content of 60 to 95 wt.-% in a mould,
- sucking out of the external liquid mixture after the shell is completely frozen,
- filling the center of the mould with a mixture here-referred as "internal mixture" comprising a fruit content of 60 to 95 wt.-% and having a degree of overrun of 20 to 80 % and
- Filling further liquid external mixture in order to close the formed shell.

The present invention provides a unique frozen aqueous-based ice confectionary product which is characterized by an extremely high fruit content, an optimized nutritional balance and preferably a composite structure based on the combination of a soft central portion and an icy fresh outer shell.

The frozen aqueous-based ice confectionary product of the present invention is preliminarily based on aqueous-based ice having an extremely high fruit content which gives the product a natural character which is highly accepted by the consumers. Furthermore, the product of the invention advantageously presents an optimized nutritional balance in terms of sugar added, fibre content, fat content and total energy value. The product may be marketed as fruit stick having inserted a stick for better handling. Lots of stick product shapes are possible depending on the shape of the moulds.

The frozen aqueous-based ice confectionary product of the present invention is preferably fat-free and cholesterol-free and does not contain milk ingredients. Further, due to the sugar naturally derived from the fruit, the amount of sugar added is limited.

### Brief description of the drawings

The present invention is further illustrated by the accompanying drawings.
Figure 1 is a schematic representation of one embodiment of the composite frozen aqueous-based ice confectionary product claimed.
Figure 2 shows the flow chart of an example of a process for the manufacture of the frozen aqueous-based ice confectionary product of the present invention.

### Detailed description of the preferred embodiments

One preferred feature of the frozen aqueous-based ice confectionary product of the present invention is the composite structure composed of an inner central portion with a degree of overrun ranging from 20 to 80% and a non-aerated outer shell surrounding at least partially the central portion. In a preferred embodiment of the present invention, the center is completely covered by the outer shell.

Another feature of the frozen aqueous-based ice confectionary product of the invention is the unmatched high fruit content in both the center of aqueous-based ice and the outer shell of aqueous-based ice being 60 to 95 wt.-%. The contribution to the fruit content comes from one or more ingredients chosen from natural fruit juice, fruit puree, fruit concentrate juice or mixtures thereof.

The total fruit content is calculated by adding the fruit content of each ingredient, taking into account the degree of concentration in case of fruit juice concentrates.

Preferably, the content of fruit in the center and in the outer shell is in a range of 75 to 90 wt.-%, more preferably, the content is in a range of 80 to 85 wt.-%.

The frozen aqueous-based ice confectionary product of the present invention is characterized by a high amount of fruit and by a product structure composed of a center of aqueous-based ice and an outer shell of aqueous-based ice. Specifically, the center is slightly freezed and comprises between 25 to 35 % of total solids. Further, the center has a degree of overrun of 20 to 80%, preferably 30 to 70% and most preferred 40 to 60 %. The outer shell of water ice is not aerated. It is usually a liquid mixture having a content of total solids of between 15 to 35 %, more preferably 25 to 30%

In a particular embodiment of the present invention, the frozen aqueous-based ice confectionary product further comprises a top coating having the same composition as the outer shell. The top coating links with the shell and close completely the inner part.

This particular product structure provides a creamy and smooth heart and an icy and fresh shell which is extremely pleasant for the consumer and can further contribute to the natural fruit character of the product claimed.

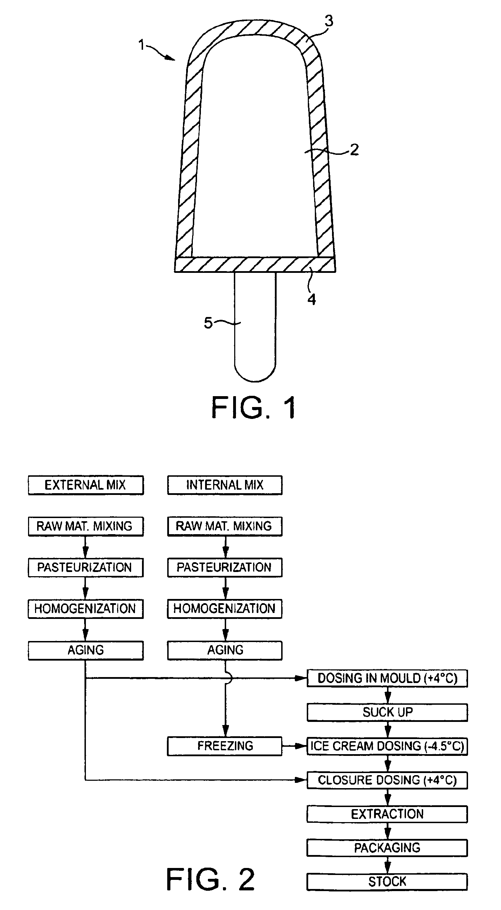

In figure 1, an example of a frozen aqueous-based ice confectionary product according to the invention is shown. The frozen aqueous-based ice confectionary product 1 which can be also called a fruit stick comprises an outer shell 3 a center portion 2. A top coating 4 is provided over to close the product. Finally, a stick 5, for example a wooden stick, is inserted in the confectionary product body.

The frozen aqueous-based ice confectionary product of the present invention contains a considerable amount of fruit sugar due to the high fruit content. If desired, the product may be further sweetened. In a preferred embodiment of the present invention, the frozen aqueous-based ice confectionary product further comprises 10 to 30 wt.-% of sweetener, more preferred 15 to 25 wt.-%. The sweetener is usually selected from monosaccharides, disaccharides and oligosaccharides, or according to specific requirements artificial sweeteners and mixtures thereof. Examples of sweeteners are dextrose, saccharose, glyco-syrups.

The frozen aqueous-based ice confectionary product of the invention preferably further comprises 1 to 6 wt.-% of fibers, preferably from 2 to 4 wt-%. The fibers come both from fruit and from edible added fibers. The added fibers are usually selected from soluble and insoluble fibers. In the particular embodiment of the present invention, the added fibers are selected from soluble fiber such as inuline.

Advantageously, the aqueous-based ice confectionery product of the invention has an optimized nutritional balance in terms of added sugar, fat, and total energy of the product. More particularly, the nutritional assessment of a product according to the invention reveals that it preferably contains less than 12.5g of added sugar per portion, more than 1.5g of fiber per 100 kcal, total fat less than 13g per portion, and a total energy below 200kcal/per portion.

The frozen aqueous-based ice confectionary product of the invention may also comprise further additives which are conventionally contained, if desired, in frozen aqueous-based ice confectionary products. In a preferred embodiment of the present invention, the frozen aqueous-based ice confectionary product of the present invention further comprises 0.01 to 1.00 wt.-% of stabilizers. The stabilizers used are selected from locust bean gum, guar gum, pectins, carrageenins and mixtures thereof.

If appropriate, the frozen aqueous-based ice confectionary product of the present invention preferably further contains 0.01 to 2.00 wt.-% of flavours and colours each. Any food grade colour may be used depending on the final confectionary product desired. More preferably, the flavours can be selected from natural fruit flavours.

In a further preferred embodiment of the invention, the frozen aqueous-based ice confectionary product comprises 0 to 3.00 wt.-% of proteins. The frozen aqueous-based ice confectionary product of the invention is preferably a non-dairy product, i.e., a product which does not contain milk ingredients. More preferred, the proteins are selected from vegetable proteins such as wheat proteins, soy bean proteins and others

The fruit puree which is one of the chief ingredients of the frozen aqueous-based ice confectionary product claimed, is a homogenous product which has been prepared from whole or peeled fruit which has been pulped by a suitable physical process. Suitable fruits include apple, banana, blackberry, blackcurrant, blueberry, cherry, cranberry, gooseberry, grapes, guava, kiwi fruit, mango, orange, papaya, passion fruit, peach, pear, pineapple, plums, pomegranate, pumpkin, raspberry, redcurrant, strawberry, lemon, apricot and tomato, coconut and mixtures thereof.

The fruit concentrate usually comprises a fruit concentration of 1,1 to 40,0%.

A typical moulded stick as shown in figure 1 may have the following composite component structure. The external shell 3 may constitute 30 to 50 % of the whole product, the inner center portion 2 may constitute 40 to 50 % of the whole product. The top coating 4 may be 0 to 30% based on the whole product.

A process for the production of the frozen aqueous-based ice confectionary product of the present invention involves for example a moulding technology conventionally used in the present field of preparing frozen confectionary products. Such a process comprises the steps of introducing a liquid mixture ("external mixture") comprising a fruit content of 60 to 95 wt.-% in a mould. Subsequently, after the shell is frozen with the required thickness, the external liquid mix not yet frozen is sucked out. After, a mixture comprising a fruit juice content of 60 to 95 wt.-% ("internal mixture") and having a degree of overrun of 20 to 80% is filled in the mould, where after a following liquid mix with same composition as the "external mixture" is dosed to close completely the shell. The overrun of the mixture of the center portion can be obtained through a freezing device and the filling into the mould can be obtained through a volumetric filler.

In a preferred embodiment of the present invention, a stick such as a wooden stick is inserted in the confectionary product body, to allow the extraction by the mould and handle the product at the consumption.

Figure 2 shows a process block diagram for a fruit stick produced as described above. The external mix for the outer shell and the internal mix for the center portion undergo several steps before introducing in the mould. The single steps are as follows:

Raw material mixing: powder ingredients are added to liquid ingredients in a agitated mixing tank, then the mixture is subjected to a pre heating treatment;
Pasteurization: the mix is heated to temperature/seconds values according to good manufacturing practices to achieve satisfactory treatment to conform to public health requirements);
Homogenization: the mix is subjected to a homogenisation stage at a pressure of at least 50 to maximum 160 bar at a temperature of at least 70° C to maximum 85°C.The mix is then rapidly cooled to chill temperature, typically 4°C) and aged ( at Chill temperature, typically 4°C).

After aging, both the mixes are used in a production line commonly used to produce ice cream in moulds.
The external mix is dosed in a mould at a temperature of +4°C. After sucking up of the liquid mix, the internal mix which has been aerated to a degree 20-80 overrun, preferably 30-70, more preferably 60, and frozen to -2°C - 8°C, pref -4°C -5°C is further introduced. If desired, a further liquid mix as top coating may be introduced at a temperature of +4°C. The product obtained is then extracted, packaged and stocked according to conventional procedures.

### Examples

The example below illustrates the invention. In this example the portions and percentages are by weight, unless otherwise stated.

### Example 1

A high fruit content frozen aqueous-based ice confectionary product is produced by using the following components:

| **Components** | **Quantity** | | **Fruit content** |
|---|---|---|---|
| | (g) | (%) | (%) |
| Water | 31, 954 | 43,773 | - |
| Peach puree (x 1,0) | 17,520 | 24,000 | 24,00 |
| Concentrated Tropic mix juice (x 4,4) | 8,395 | 11,500 | 50, 60 |
| Sugar | 7,493 | 10,264 | - |
| Dextrose | 4, 990 | 6,836 | - |
| Vegetable Fiber | 1,460 | 2,000 | - |
| Concentrated Lemon juice(x5,5) | 0,730 | 1,000 | 5,50 |
| Stab. LBG | 0,134 | 0, 184 | - |
| Yellow colour | 0,073 | 0,100 | - |
| Vegetable proteins | 0,069 | 0,095 | - |
| Stab Pectine | 0,052 | 0,071 | - |
| Stab. Guar gum | 0,046 | 0, 063 | - |
| Mango flavour | 0,044 | 0, 060 | - |
| Peach flavour | 0,022 | 0, 030 | - |
| Stab. Carragenine | 0,018 | 0, 024 | - |
| **Total** | **73,000** | **100,000** | **80,10** |

The single compositions for both external and internal mixes is given here below:
1. External mix ( for Shell and Closure )- Overrun 0%

| **Components** | **Quantity** |
|---|---|
| | (g) |
| Water | 466,25 |
| Peach puree | 240,0 |
| Concentrated Tropic mix juice | 115,0 |
| Sugar | 105,0 |
| Dextrose | 40,0 |
| Vegetable Fiber | 20,0 |
| Concentrated Lemon juice | 10,0 |
| Stab. LBG | 0,65 |
| Mango flavour | 0,6 |
| Yellow colour | 1,0 |
| Stab. Guar gum | 1,2 |
| Peach flavour | 0,3 |
| **Total** | **1000,0** |

2. Internal mix - Overrun 60%

| **Components** | **Quantity** |
|---|---|
| | (g) |
| Water | 406,7 |
| Peach puree | 240,0 |
| Concentrated Tropic mix juice | 115,0 |
| Sugar | 100,0 |
| Dextrose | 100,0 |
| Vegetable Fiber | 20,0 |
| Concentrated Lemon juice | 10,0 |
| Stab. LBG | 2,4 |
| Mango flavour | 0,6 |
| Yellow colour | 1,0 |
| Vegetable proteins | 2,0 |
| Stab Pectine | 1,5 |
| Peach flavour | 0,3 |
| Stab. Carragenine | 0,5 |
| **Total** | **1000,0** |

## Claims

1. A frozen aqueous-based ice confectionary product including
i) a center of aqueous-based ice comprising a fruit content of 60 to 95 wt.-% and having a degree of overrun of 20 to 80 % and
ii) a non aerated outer shell of aqueous-based ice comprising a fruit content of 60 to 95 wt.-%.

2. The frozen aqueous-based ice confectionary product according to claim 1 wherein the content of fruit in the center and in the outer shell is in a range of 75 to 90 wt.-%.

3. The frozen aqueous-based ice confectionary product according to claim 2 wherein the content of fruit in the center and in the outer shell is in a range of 80 to 85 wt.-%.

4. The frozen aqueous-based ice confectionary product according to any one of claims 1 to 3 further comprising a top coating having the same composition as the outer shell.

5. The frozen aqueous-based ice confectionary product according to any one of claims 1 to 4 wherein the contribution to the fruit content comes from the presence of one or more natural fruit juice, fruit puree, fruit concentrate juice or mixtures thereof.

6. The frozen aqueous-based ice confectionary product according to any one of claims 1 to 5 wherein the degree of overrun in the center is in a range of 30 to 70 %.

7. The frozen aqueous-based ice confectionary product according to claim 6 wherein the degree of overrun is in a range of, 40 to 60 %.

8. The frozen aqueous-based ice confectionary product according to any one of claims 1 to 7 further comprising 10 to 30 wt.-% of sweetener.

9. The frozen aqueous-based ice confectionary product according to claim 8 further comprising 15 to 25 wt.-% of sweetener.

10. The frozen aqueous-based ice confectionary product according to any one of claims 1 to 9 further comprising 1 to 6 wt.-% of fibers.

11. The frozen aqueous-based ice confectionary product according to any one of claims 1 to 10 further comprising 0.01 to 1.00 wt.-% of stabilisers.

12. The frozen aqueous-based ice confectionary product according to claim 11 wherein the stabilisers are selected from locust bean gum, guar gum, pectins, carrageenins and mixtures thereof.

13. The frozen aqueous-based ice confectionary product according to any one of claims 1 to 12 further comprising 0 to 3.00 wt.-% of proteins.

14. A process for the production of a frozen aqueous-based ice confectionary product comprising the steps of
- introducing a liquid mixture referred as "external mixture" comprising a fruit content of 60 to 95 wt.-% in a mould to form a shell,
- sucking out of the remaining external liquid mixture after the shell is completely frozen,
- filling a mixture comprising a fruit content of 60 to 95 wt.-% and having a degree of overrun of 20 to 80 % in the mould and
- dosing further liquid mix with same composition as "external mixture" to close the formed shell.

15. The frozen aqueous-based ice confectionery product according to any one of claim 1 to 8 wherein the total energy is less than 80Kcal/100g.

## Patentansprüche

1. Gefrorenes Speiseeisprodukt auf Wasserbasis mit
i) einem Mittelteil aus Speiseeis auf Wasserbasis, das einen Fruchtgehalt von 60 bis 95 Gewichtsprozent aufweist, und einen Aufschlag von 20 bis 80% besitzt, und
ii) eine nicht mit Luft durchsetzte, äußere Ummantelung aus Speiseeis auf Wasserbasis mit einem Fruchtgehalt von 60 bis 95 Gewichtsprozent.

2. Gefrorenes Speiseeisprodukt auf Wasserbasis nach Anspruch 1, wobei der Fruchtgehalt in der Mitte und in der äußeren Ummantelung zwischen 75 und 90 Gewichtsprozent liegt.

3. Gefrorenes Speiseeisprodukt auf Wasserbasis nach Anspruch 2, wobei der Fruchtgehalt in der Mitte und in der äußeren Ummantelung zwischen 80 und 85 Gewichtsprozent liegt.

4. Gefrorenes Speiseeisprodukt auf Wasserbasis nach einem der Ansprüche 1 bis 3, das weiterhin einen Überzug mit der gleichen Zusammensetzung wie die der äußeren Ummantelung besitzt.

5. Gefrorenes Speiseeisprodukt auf Wasserbasis nach einem der Ansprüche 1 bis 4, wobei der Fruchtgehalt aus dem Vorhandensein eines oder mehrerer natürlicher Fruchtsäfte, Fruchtpüree, Fruchtsaftkonzentrat oder einer Mischung daraus besteht.

6. Gefrorenes Speiseeisprodukt auf Wasserbasis nach einem der Ansprüche 1 bis 5, wobei der Aufschlag in der Mitte zwischen 30 und 70 % liegt.

7. Gefrorenes Speiseeisprodukt auf Wasserbasis nach Anspruch 6, wobei der Aufschlag zwischen 40 und 60 % liegt.

8. Gefrorenes Speiseeisprodukt auf Wasserbasis nach einem der Ansprüche 1 bis 7, das weiterhin 10 bis 30 Gewichtsprozent an Süßungsmittel aufweist.

9. Gefrorenes Speiseeisprodukt auf Wasserbasis nach Anspruch 8, das weiterhin 15 bis 25 Gewichtsprozent an Süßungsmittel aufweist.

10. Gefrorenes Speiseeisprodukt auf Wasserbasis nach einem der Ansprüche 1 bis 9, das weiterhin 1 bis 6 Gewichtsprozent an Ballaststoffen aufweist.

11. Gefrorenes Speiseeisprodukt auf Wasserbasis nach einem der Ansprüche 1 bis 10, das weiterhin 0,01 bis 1,00 Gewichtsprozent an Stabilisatoren aufweist.

12. Gefrorenes Speiseeisprodukt auf Wasserbasis nach Anspruch 11, wobei die Stabilisatoren aus Johannisbrotkernmehl, Guarkernmehl, Pektinen, Carragenen und Mischungen daraus ausgewählt sind.

13. Gefrorenes Speiseeisprodukt auf Wasserbasis nach einem der Ansprüche 1 bis 12, das weiterhin 0 bis 3,00 Gewichtsprozent an Proteinen aufweist.

14. Verfahren zur Herstellung eines gefrorenen Speiseeisproduktes auf Wasserbasis, bei dem
- eine mit "externe Mischung" bezeichneten flüssigen Mischung mit einem Fruchtgehalt von 60 bis 95 Gewichtsprozent in eine Form eingebracht wird, um eine Ummantelung zu bilden
- die restliche externe, flüssige Mischung abgesaugt wird, nachdem die Ummantelung vollständig gefroren ist,
- eine Mischung mit einem Fruchtgehalt von 65 bis 95 Gewichtsprozent und einem Aufschlag von 20 bis 80 % in die Form gefüllt wird, und
- weitere Flüssigmischung mit der gleichen Zusammensetzung als "externe Mischung" dosiert wird, um die ausgeformte Ummantelung zu schließen.

15. Gefrorenes Speiseeisprodukt auf Wasserbasis nach einem der Ansprüche 1 bis 8, wobei die Gesamtenergie weniger als 80 kcal/100 g beträgt.

## Revendications

1. Produit de confiserie de type glace à base aqueuse congelé comprenant
i) une partie centrale de glace à base aqueuse comprenant une teneur en fruit de 60 à 95 % en poids et ayant un degré de foisonnement de 20 à 80 % et
ii) une enveloppe extérieure non aérée de glace à base aqueuse comprenant une teneur en fruit de 60 à 95 % en poids.

2. Produit de confiserie de type glace à base aqueuse congelé selon la revendication 1, dans lequel la teneur en fruit dans la partie centrale et dans l'enveloppe extérieure est dans une plage de 75 à 90 % en poids.

3. Produit de confiserie de type glace à base aqueuse congelé selon la revendication 2, dans lequel la teneur en fruit dans la partie centrale et dans l'enveloppe extérieure est dans une plage de 80 à 85 % en poids.

4. Produit de confiserie de type glace à base aqueuse congelé selon l'une des revendications 1 à 3, comprenant en outre un enrobage supérieur ayant la même composition que l'enveloppe extérieure.

5. Produit de confiserie de type glace à base aqueuse congelé selon l'une des revendications 1 à 4, dans lequel la contribution à la teneur en fruit provient de la présence d'un ou plusieurs jus de fruit naturel, purée de fruit, jus de concentré de fruit ou mélanges de ceux-ci.

6. Produit de confiserie de type glace à base aqueuse congelé selon l'une des revendications 1 à 5, dans lequel le degré de foisonnement dans la partie centrale est dans la gamme de 30 à 70 %.

7. Produit de confiserie de type glace à base aqueuse congelé selon la revendication 6, dans lequel le degré de foisonnement est dans la gamme de 40 à 60 %.

8. Produit de confiserie de type glace à base aqueuse congelé selon l'une des revendications 1 à 7 comprenant en outre 10 à 30 % en poids d'édulcorant.

9. Produit de confiserie de type glace à base aqueuse congelé selon la revendication 8 comprenant en outre de 10 à 25 % en poids d'édulcorant.

10. Produit de confiserie de type glace à base aqueuse congelé selon l'une des revendications 1 à 9 comprenant en outre de 1 à 6 % en poids de fibres.

11. Produit de confiserie de type glace à base aqueuse congelé selon l'une des revendications 1 à 10 comprenant en outre de 0,01 à 1,00 % en poids de stabilisateurs.

12. Produit de confiserie de type glace à base aqueuse congelé selon la revendication 11, dans lequel les stabilisateurs sont choisis parmi la gomme de caroube, gomme de guar, pectines, carraghénines et mélanges de ceux-ci.

13. Produit de confiserie de type glace à base aqueuse congelé selon l'une des revendications 1 à 12 comprenant en outre de 0 à 3,00 % en poids de protéines.

14. Procédé pour la production d'un produit de confiserie de type glace à base aqueuse congelé comprenant les étapes consistant à :
- introduire un mélange liquide qualifié de « mélange externe » comprenant une teneur en fruit de 60 à 95 % en poids dans un moule pour former une enveloppe,
- aspirer le mélange liquide externe restant après que l'enveloppe est complètement congelée,
- remplir un mélange comprenant une teneur en fruit de 60 à 95 % en poids et ayant un degré de foisonnement de 20 à 80 % dans le moule et
- doser un autre mélange liquide ayant la même composition que le « mélange externe » pour fermer l'enveloppe formée.

15. Produit de confiserie de type glace à base aqueuse congelé selon l'une des revendications 1 à 8, dans lequel l'énergie totale est inférieure à 80 Kcal/100 g.
